# EUROPEAN PATENT APPLICATION

(11) **EP 3 883 088 A1**
(43) Date of publication of application: **22.09.2021**
(21) Application number: 19901521.5
(22) Date of filing: 24.12.2019
(51) Int. Cl.: H02K 1/12, H02K 1/04

(54) **MOTOR**

(30) Priority: 26.12.2018 KR 20180168992
(71) Applicant: LG Innotek Co., Ltd., Seoul 07796 (KR)
(72) Inventor: KIM, Yong Jin, Seoul 04637 (KR)
(74) Representative: Plasseraud IP
(86) International application number: PCT/KR2019/018409
(87) International publication number: WO 2020/138922

(57) **Abstract**

A motor comprises: a stator; and a rotor arranged inside the stator. The stator comprises: a stator core comprising a head and teeth; an insulator coupled to the teeth; a coil wound around the outer surface of the insulator; and a terminal having both ends of the coil coupled thereto. The terminal comprises: a terminal body; a first coupling part extending from the terminal body and coupled to the coil; and a second coupling part extending from the terminal body and coupled to the coil.

## Description

### [Technical Field]

This embodiment relates to a motor.

### [Background Art]

The following description provides background information on the present embodiment, and does not describe the prior art.

A motor is a device that converts electrical energy into rotational energy by using the force received by a conductor in a magnetic field. As the use of motors has recently expanded, the role of motors is becoming more important. In particular, as automobiles are electrified rapidly, the demand for motors applied to steering systems, braking systems, design systems, gear systems, and the like is greatly increasing.

In general, the rotor rotates by an electromagnetic interaction between the rotor and the stator. At this time, the rotation shaft inserted in the rotor is also rotated to generate rotational driving force.

In detail, the motor may include a stator disposed inside the housing and a rotor disposed inside the stator. The stator includes a core and a coil, and a coil may be wound around the stator core. In addition, a busbar for electrically connecting the coils may be installed on the upper part of the stator in order to facilitate the wiring work of the wound coils.

A front end part of the coil may be coupled to a bus bar. Power is applied to the busbar so that a current flows through the coil. As a method of coupling a front end part of the coil to the busbar, fusing, welding, and soldering may be included.

Both end parts of the coil can be coupled to a busbar. A coupling part for fusing both end parts of the coil may be formed on the busbar. When winding a coil, while one end of a coil is fixed to the coupling part of the busbar, the other end of the coil can be coupled to the coupling part.

However, in the nozzle-type coil winding method, the forming process in which both end parts of the coil are fixed to a single coupling part in one coupling part causes variations in winding quality depending on the operator, thereby possibly causing a lifting phenomenon in the fusing section.

### [Detailed Description of the Invention]

### [Technical Subject]

The present embodiment is to provide a motor capable of stabilizing fusing between a busbar and a coil and omitting a forming process when winding a coil.

### [Technical Solution]

In one embodiment, a motor comprises: a stator; and a rotor arranged inside the stator. The stator comprises: a stator core comprising a head and teeth; an insulator coupled to the teeth; a coil wound around the outer surface of the insulator; and a terminal having both ends of the coil coupled thereto. The terminal comprises: a terminal body; a first coupling part extending from the terminal body and coupled to the coil; and a second coupling part extending from the terminal body and coupled to the coil.

The terminal body, the first coupling part, and the second coupling part may be formed as one body.

One end of the coil is coupled to the first coupling part in which a first hole whose inner circumferential surface surrounds the outer surface of the coil is disposed, and the other end of the coil is coupled to the second coupling part in which a second hole whose inner circumferential surface surrounds the outer surface of the coil may be disposed.

The second coupling part may be disposed above the first coupling part with respect to the upward and downward directions.

A terminal connection part to which an external power is applied may be disposed above the terminal body.

Based on the winding order of the coil, the starting end of the coil is coupled to the second coupling part, and the terminating end of the coil may be coupled to the first coupling part.

A guide groove may be disposed on an inner surface of the insulator being formed by being recessed further than other regions and accommodating at least a portion of the coil.

The guide groove may be disposed such that at least a portion of region is overlapped with the first coupling part or the second coupling part in the upward and downward directions.

A plurality of terminals may be provided and disposed to be spaced apart from each other along the circumferential direction of the insulator.

A terminal coupling part including a groove being coupled with the terminal may be disposed on an upper surface of the insulator.

### [Advantageous Effects]

According to the present invention, a plurality of coupling parts capable of coupling both ends of a coil within a single terminal is provided, so that a fusing process at the starting end and terminating end of the coil in the stator can be easily performed. In particular, a forming process for arranging coils within a single coupling part may be omitted compared to the prior art.

In addition, since a guide groove for guiding the coil is provided on an inner surface of an insulator, there are advantages in that the end part of the coil can be easily guided to the coupling part, and the insulator can be firmly fixed to the insulator.

### [Brief Description of Drawings]

FIG. 1 is a perspective view of a stator according to an embodiment of the present invention.
FIG. 2 is a plan view illustrating an upper surface of a stator according to an embodiment of the present invention.
FIG. 3 is a plan view illustrating an upper surface of a stator before a fusing process according to an embodiment of the present invention.
FIG. 4 is an exploded perspective view of a stator according to an embodiment of the present invention.
FIG. 5 is a perspective view illustrating a coupling state of a terminal and a coil according to an embodiment of the present invention.
FIG. 6 is a plan view illustrating a coupling state of a terminal and a coil according to an embodiment of the present invention.

### [BEST MODE]

Hereinafter, preferred embodiments of the present invention will be described with reference to the accompanying drawings. In describing the reference numerals for elements of each drawing, the same elements are denoted by the same numerals as possible, even if they are indicated on different drawings.

In addition, terms such as first, second, A, B, (a), (b), and the like may be used in describing the components of the embodiment of the present invention. These terms are only for distinguishing the component from other components, and are not limited to the nature, order, or sequence of the component by the term. When a component is described as being 'connected', 'coupled' or 'interconnected' to another component, that component may be directly connected, coupled or connected to that other component, but it should be understood that another component may be 'connected', 'coupled' or 'interconnected' between the component and the other component.

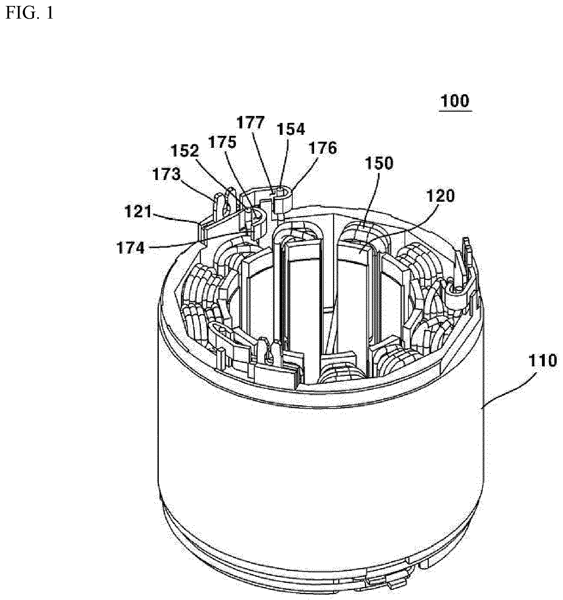

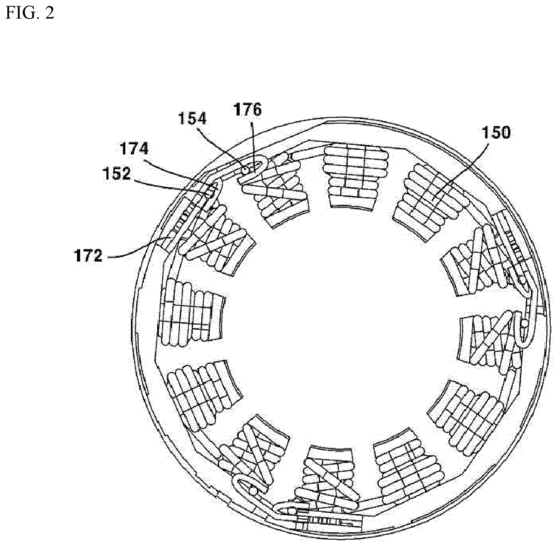

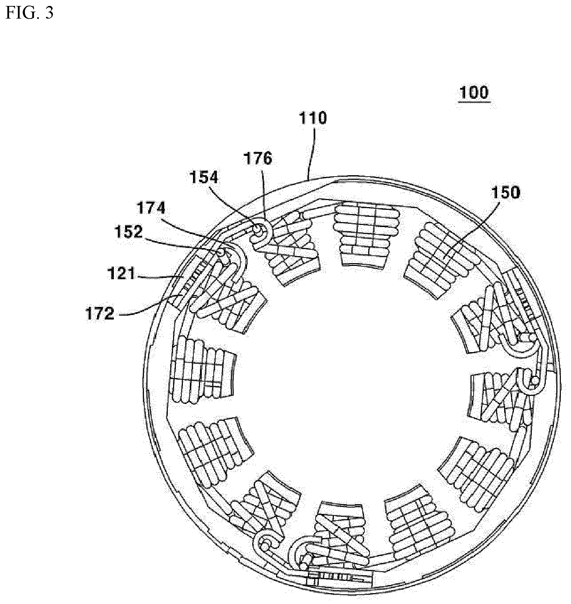

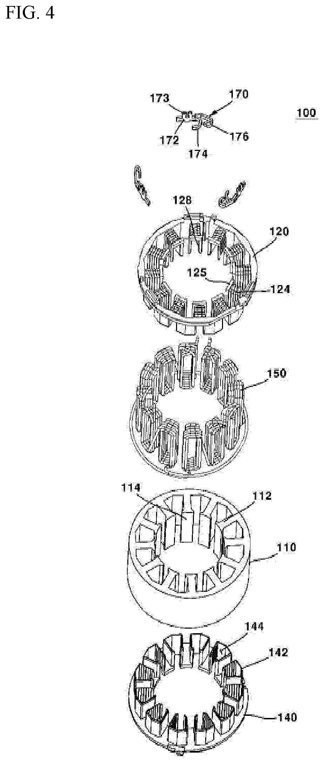

FIG. 1 is a perspective view of a stator according to an embodiment of the present invention, FIG. 2 is a plan view illustrating an upper surface of a stator according to an embodiment of the present invention, FIG. 3 is a plan view illustrating an upper surface of a stator before a fusing process according to an embodiment of the present invention, and FIG. 4 is an exploded perspective view of a stator according to an embodiment of the present invention.

Referring to FIGS. 1 to 4, a motor according to an embodiment of the present invention may include a stator **100** and a rotor (not shown) disposed inside the stator **100**.

The stator **100** may include a stator core **110**, insulators **120** and **140**, and a coil **150**.

The stator core **110** may be provided as a block made of a metal material, or may be configured by being stacked with a plurality of core members made of a thin plate material. A space for arranging the rotor and the rotating shaft (not shown) may be formed inside the stator core **110**.

A plurality of teeth **112** may be formed on the stator core **110** being protruded toward a surface facing the rotor. The coil **150** may be wound around the teeth **112** through the insulators **120** and **140**. The insulators **120** and **140** may be coupled to the teeth **112**.

The front end part **114** of the teeth **112** may have a circumferential cross-sectional length longer than that of other regions, thereby possibly forming an inner boundary of the winding region of the coil **150**. A plurality of teeth **112** may be provided and disposed to be spaced apart from each other along the circumferential direction of the stator core **110**.

The insulators **120** and **140** may be coupled to an upper side and a lower side of the stator core **110**, respectively. The insulators **120** and **140** insulate the coil **150** wound around the teeth **112** from being electrically conductive with the stator core **110**. The insulators **120** and **140** may be formed of a resin material.

The insulators **120** and **140** may include an upper insulator **120** coupled to an upper portion of the stator core **110** and a lower insulator **140** coupled to a lower portion of the stator core **110**. The upper insulator **120** and the lower insulator **140** may be provided in a vertically symmetrical shape so that the teeth **112** and the inner surface of the stator core **110** are surrounded from the upper and lower sides, respectively.

The upper insulator **120** may include an insulator body **124** surrounding an upper surface and an inner surface of the tooth **112**. The coil **150** may be wound on an outer surface of the insulator body **124**. An accommodating groove **128** for accommodating a portion of the stator **150** may be formed inside the insulator body **124**. In addition, guide portions **126** being protruded further upward than the upper surface of the insulator body **124** may be formed in the inner end part region and the outer end part region of the insulator body **124**, respectively. The guide part **126** is formed to be protruded from the insulator body **124** at a predetermined height, so that the coil wound around the insulator body **124** may be prevented from being separated toward the outside.

The lower insulator **140** may include an insulator body **142** surrounding a lower surface and an inner surface of the teeth **112**. The coil **150** may be wound on an outer surface of the insulator body **142**. An accommodating groove **144** for accommodating a portion of the stator **150** may be formed inside the insulator body **142**. In addition, guide portions (not shown) being protruded downward from the lower surface of the insulator body **142** may be formed in the inner end part region and the outer end part region of the insulator body **124**, respectively. The guide portion is formed to be protruded from the insulator body **142** at a predetermined height, so that the coil wound around the insulator body **142** may be prevented from being separated outward.

The coil **150** may be wound around the stator **100**. The coil **150** may be coupled to outer surfaces of the upper insulator **120** and the lower insulator **140** coupled to the stator core **110**. The coil **150** may be wound on outer surfaces of the insulators **120** and **140**.

Coils wound around the stator **100** may be divided into a plurality of groups and disposed. The plurality of groups may be classified according to the type of applied power. For example, the coil **150** may include a U-phase coil to which U-phase power is applied, a V-phase coil to which V-phase power is applied, and a W-phase coil to which W-phase power is applied. The plurality of groups of coils may be alternately wound around the teeth **112**.

A terminal **170** may be coupled to the insulators **120** and **140**. Power is applied to the terminal **170** from an external component, and the applied power may be delivered to the coil **150**. A plurality of terminals **170** may be provided so that different types of power are applied. As an example, three terminals **170** may be provided so that U-phase, V-phase, and W-phase power may be delivered to the coil **150**. The three terminals **170** may be coupled to the insulators **120** and **140** and disposed to be spaced apart from each other in a circumferential direction.

The terminal **170** may be coupled to the upper insulator **120** or the lower insulator **140**. Both ends of the coil **150** may be coupled to the terminal **170**.

Hereinafter, for convenience of description, an example in which the terminal **170** is coupled to the upper insulator **120** will be described.

The terminal **170** may be coupled to an upper side of the upper insulator **120**. A terminal coupling part **121** formed with a groove to accommodate a partial region of the terminal **170** may be formed on an upper surface of the upper insulator **120**. The terminal coupling part **121** may be formed to be protruded upward from an upper surface of the upper insulator **120**. The terminal coupling part **121** may be formed in a shape of a plurality of plates facing each other, and a groove for accommodating at least a partial region of the terminal **150** may be disposed between the plurality of plates.

The terminal **170** may be formed of a metal material.

The terminal **170** may include a terminal body **172**, a first coupling part **174** disposed at one end of the terminal body **172**, and a second coupling part **176** disposed outside the first coupling part **174**. The terminal **170** may be formed by cutting and bending a single plate.

In detail, the terminal body **172** may be formed in a plate shape. The terminal body **172** may be coupled to the terminal coupling part **121**. The terminal body **172** may be accommodated in a groove in the terminal coupling part **121**. A terminal connection part **173** may be disposed on an upper side of the terminal body **172**. An external terminal may be coupled to the terminal connection part **173** to apply power to the terminal **170**.

The first coupling part **174** is disposed outside the terminal body **172**. The first coupling part **174** may be formed by bending one end of the terminal **170**. A first hole **175** in which one end of the coil **150** is accommodated may be formed inside the first coupling part **174**. The first coupling part **174** may be formed by bending an end part region to surround the coil **150** while one end of the coil **150** is accommodated inside. The inner circumferential surface of the first coupling part **174** may surround the outer surface of the coil **150**.

The second coupling part **176** is disposed outside the first coupling part **174** with respect to the terminal body **172**. The second coupling part **176** may be disposed above the first coupling part **174** with respect to the upward and downward directions.

The second coupling part **176** may be formed by bending one end of the terminal **170**. Between the second coupling part **176** and the first coupling part **174**, a cutout part, which is a cut-out area, may be located. A second hole **177** in which the other end of the coil **150** is accommodated may be formed inside the second coupling part **176**. The second coupling part **176** may be formed by bending an end region to surround the coil **150** while the other end of the coil **150** is accommodated inside. The inner circumferential surface of the second coupling part **176** may surround the outer surface of the coil **150**.

In the present specification, it is described that one end and the other end of the coil **150** are disposed in the first coupling part **174** and the second coupling part **176**, respectively, but this is not limited thereto, and end parts of coils wound on different teeth **112** may be coupled to the first coupling part **174** and the second coupling part **176**. However, polarities of power of the coil **150** wound around the first coupling part **174** and the second coupling part **176** may be the same.

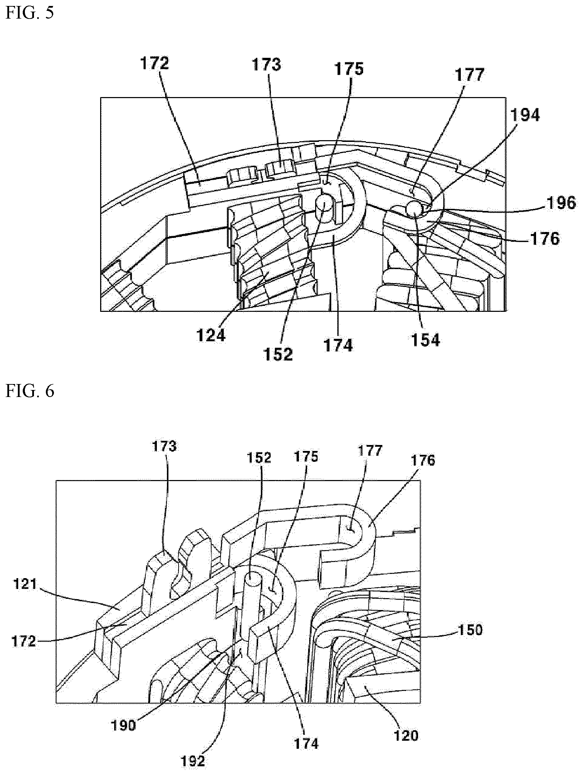

FIG. 5 is a perspective view illustrating a coupling state of a terminal and a coil according to an embodiment of the present invention, and FIG. 6 is a plan view illustrating a coupling state of a terminal and a coil according to an embodiment of the present invention.

Referring to FIGS. 5 and 6, guide grooves **192** and **196** accommodating the coil **150** may be formed on the inner surface of the insulator **120** according to an embodiment of the present invention.

In detail, a first guide part **190** and a second guide part **196** being protruded from the inner surface toward the inside may be disposed on an inner surface of the insulator **120**. The first guide part **190** may be disposed in an area being overlapped with the first coupling part **174** in the upward and downward directions. The second guide part **194** may be disposed in an area being overlapped with the second coupling part **176** in the upward and downward directions.

In addition, a first guide groove **192** that is formed by being recessed from the inner surface toward the inside may be formed on an inner surface of the first guide part **190**. The coil **150** may be accommodated in the first guide groove **192**. An area of the coil **150** accommodated in the first guide groove **192** may be an area adjacent to one end of the coil **150** coupled to the first coupling part **174**. The first guide groove **192** may be disposed so as to be partially overlapped with the first hole **175** in the upward and downward directions.

A second guide groove **196** formed by being recessed from the inner surface to the inside may be formed on an inner surface of the second guide part **194**. The coil **150** may be accommodated in the second guide groove **196**. An area of the coil **150** accommodated in the second guide groove **196** may be an area adjacent to the other end of the coil **150** coupled to the second coupling part **176**. The second guide groove **196** may be disposed so as to be partially overlapped with the second hole **177** in the upward and downward directions.

Therefore, by the first guide groove **192** and the second guide groove **196**, both end parts of the coil **150** may be easily coupled to the first coupling part **174** and the second coupling part **176**, respectively. In addition, it is possible to prevent the coil **150** from being separated to other regions by the first guide groove **192** and the second guide groove **196**.

To describe the winding process of the coil **150**, in a state in which the starting end of the coil **150** at which the winding starts when the coil **150** is wound is fixed to the second coupling part **186**, the insulator **120** is rotated a number of times to surround the outer surface of the insulator **120**. At this time, the coupling of the starting end of the coil **150** and the second coupling part **176** may be achieved by placing the starting end inside the second hole **194** and bending the second coupling part **176**.

Next, the terminating end at which the winding of the coil **150** is terminated may be disposed inside the first coupling part **174** to be coupled to the first coupling part **174**. Similarly, the coupling of the terminating end of the coil **150** and the first coupling part **174** may be achieved by placing the terminating end inside the first hole **175** and bending the first coupling part **174**.

The coil **150** may be wound through a nozzle. In addition, both end parts of the coil **150** coupled to the inside the first coupling part **174** and the second coupling part **176** may be fused.

According to the above structure, a plurality of coupling parts capable of coupling both ends of a coil in one terminal are provided, so that a fusing process at the starting end and terminating end of the coil inside the stator can be easily performed. In particular, a forming process for arranging coils inside a single coupling part may be omitted compared to the prior art.

In addition, by providing a guide groove for guiding the coil on an inner surface of the insulator, there are advantages in that the end of the coil can be easily guided to the coupling part, and the insulator can be firmly fixed to the insulator.

In the above, even though all the components constituting the embodiments of the present invention are described as being combined into one or operating in combination, the present invention is not necessarily limited to these embodiments. That is, within the scope of the object of the present invention, all the constituent elements may be selectively combined and operated in one or more. In addition, the terms 'include', 'consist of, or 'have' described above mean that the corresponding component can be present unless otherwise stated, so other components are excluded. It should not be construed as being able to further include other components. All terms, including technical or scientific terms, have the same meaning as commonly understood by one of ordinary skill in the art, unless otherwise defined. Terms commonly used, such as terms defined in the dictionary, should be interpreted as being consistent with the meaning of the context of the related technology, and are not interpreted as ideal or excessively formal meanings unless explicitly defined in the present invention.

The above description is merely illustrative of the technical idea of the present invention, and those of ordinary skill in the art to which the present invention pertains will be able to make various modifications and variations without departing from the essential characteristics of the present invention. Accordingly, the embodiments disclosed in the present invention are not intended to limit the technical idea of the present invention, but to explain the technical idea, and the scope of the technical idea of the present invention is not limited by these embodiments. The scope of protection of the present invention should be interpreted by the following claims, and all technical ideas within the scope equivalent thereto should be construed as being included in the scope of the present invention.

## Claims

1. A motor comprising:
a stator; and
a rotor arranged inside the stator,
wherein the stator comprises:
a stator core including a head and teeth;
an insulator coupled to the teeth;
a coil wound around the outer surface of the insulator; and
a terminal having both ends of the coil coupled thereto,
wherein the stator comprises:
a stator core comprising a head and teeth;
an insulator coupled to the teeth;
a coil wound around the outer surface of the insulator; and
a terminal having both ends of the coil coupled thereto, and
wherein the terminal comprises:
a terminal body;
a first coupling part extending from the terminal body and coupled to the coil; and
a second coupling part extending from the terminal body and coupled to the coil.

2. The motor according to claim 1, wherein the terminal body, the first coupling part, and the second coupling part are formed as one body.

3. The motor according to claim 1, wherein one end of the coil is coupled to the first coupling part in which a first hole whose inner circumferential surface surrounds the outer surface of the coil is disposed, and
wherein the other end of the coil is coupled to the second coupling part in which a second hole whose inner circumferential surface surrounds the outer surface of the coil is disposed.

4. The motor according to claim 1, wherein the second coupling part is disposed above the first coupling part with respect to the upward and downward directions.

5. The motor according to claim 1, wherein a terminal connection part to which an external power is applied is disposed above the terminal body.

6. The motor according to claim 1, wherein based on the winding order of the coil, the starting end of the coil is coupled to the second coupling part, and the terminating end of the coil is coupled to the first coupling part.

7. The motor according to claim 1, wherein a guide groove is disposed on an inner surface of the insulator formed by being recessed further than other regions and accommodating at least a portion of the coil.

8. The motor according to claim 7, wherein the guide groove is disposed such that at least a portion of region is overlapped with the first coupling part or the second coupling part in the upward and downward directions.

9. The motor according to claim 1, wherein a plurality of terminals is provided and disposed to be spaced apart from each other along the circumferential direction of the insulator.

10. The motor according to claim 1, wherein a terminal coupling part including a groove coupled with the terminal is disposed on an upper surface of the insulator.
